# EUROPÄISCHE PATENTSCHRIFT

(11) **EP 1 682 812 B1**
(45) Veröffentlichungstag und Bekanntmachung des Hinweises auf die Patenterteilung: **18.08.2010**
(21) Anmeldenummer: 04803100.9
(22) Anmeldetag: 01.11.2004
(51) Int. Cl.: F16L 59/00

(54) **LEITUNGSKOMPONENTE FÜR EIN ENERGIENETZ, DEREN VERWENDUNG SOWIE VERFAHREN ZUM LEITUNGSTRANSPORT VON KRYOGENEN ENERGIETRÄGERN**
CONDUIT COMPONENT FOR A POWER SUPPLY NETWORK, USE THEREOF AND METHOD FOR TRANSPORTING CRYOGENIC ENERGY CARRIERS IN CONDUITS
COMPOSANTS CONDUITES D'UN RÉSEAU FOURNISSEUR DE PUISSANCE, SON UTILISATION ET PROCÉDÉ DE TRANSPORT D'AGENTS D'ÉNERGIE CRYOGÈNES PAR CONDUITES

(30) Priorität: 04.11.2003 DE 10352128
(43) Veröffentlichungstag der Anmeldung: 26.07.2006
(73) Patentinhaber: Evonik Degussa GmbH, 45128 Essen (DE)
(72) Erfinder: DYLLA, Anett, 63755 Alzenau (DE)
(86) Internationale Anmeldenummer: PCT/EP2004/012344
(87) Internationale Veröffentlichungsnummer: WO 2005/043028

(56) Entgegenhaltungen:
- EP-A- 1 338 554
- DE-A- 19 917 330
- DE-A1- 3 836 061
- DE-C1- 19 641 647
- US-A- 4 492 089
- US-A- 4 887 433
- US-A- 5 307 639
- US-A- 6 012 292
- US-A- 6 123 110
- US-A1- 2002 112 487

## Beschreibung

Die Erfindung betrifft eine Leitungskomponente für ein Energienetz und ein Verfahren zur Versorgung von Verbrauchern mit kryogenen Energieträgern, sowie zur Durchführung des Verfahrens besonders geeignete Leitungen.

Infolge der begrenzten Vorräte an fossilen Brennstoffen und der Klimaschutzdiskussion wird zunehmend eine in absehbarer Zeit notwendige Umstellung bzw. eine Ergänzung des wachsenden Energiebedarfs mit umweltverträglichen und langfristig verfügbaren Energieträgem prognostiziert.

Eine aussichtsreiche Alternative für diese Ergänzung und Umstellung der fossilen Energiewirtschaft ist der Einsatz von kryogenen Energieträgern, beispielsweise eine ökologische Wasserstoff-Wirtschaft.

Wasserstoff lässt sich aus erneuerbaren Quellen wie zum Beispiel Sonnenenergie, Wind-, Wasserkraft sowie aus Biomasse herstellen und ist ohne oder mit geringen Umweltbelastungen unbegrenzt verfügbar.

Diesen idealen Vorstellungen, kryogene Energieträger und insbesondere Wasserstoff als Energieträger der Zukunft einzusetzen, wird entgegengehalten, dass freier Wasserstoff unter Normalbedingungen in der Natur nicht vorkommt, d.h. unter Einsatz von Energie gewonnen werden muss. Zum anderen sind kryogene Energieträger und insbesondere Wasserstoff sehr leicht und extrem flüchtig, so dass für die Handhabung, den Transport und die Lagerung erhebliche Aufwendungen notwendig sind.

Unter heutigen Marktbedingungen ist die Ökonomie des Einsatzes kryogener Energieträger und insbesondere die Wasserstoffökonomie noch deutlich teurer als die etablierte Energiewirtschaft mit Stromnetzen aus zentralen Kraftwerken und der zentralen und dezentralen Wärmeerzeugung aus bei Raumtemperatur festen, flüssigen und gasförmigen fossilen Brennstoffen.

Obwohl der Stand der Technik zur Energiegewinnung aus erneuerbaren Quellen weit vorangeschritten ist, wird das wirtschaftliche Potential sehr kontrovers diskutiert. Den Strom erzeugenden regenerativen Energiequellen (beispielsweise Sonne, Wind, Wasser) wird entgegengehalten, dass sie auf Grund der natürlichen Schwankungen in der Energieproduktion die Schwankungen im Verbrauch nicht abdecken können und somit die parallele Vorhaltung und Bereitstellung von Strom aus etablierten Kraftwerken über den Netzverbund notwendig ist. Dahinter steckt die Problematik, dass sich elektrische Energie in großen Mengen nicht wirtschaftlich speichern lässt und im Moment der Stromerzeugung auch verbraucht werden muss. Somit werden heute die erneuerbaren Energien in der Regel nicht alternativ sondern zusätzlich zu konventionellen Systemen betrieben.

Die Investitionen in die Anlagen zur Gewinnung erneuerbarer Energien führen noch zu deutlich höheren Kosten pro Kilowattstunde als die Energiekosten aus konventionellen Systemen.

Ein großer Teil der fossilen Brennstoffe wird heute für die dezentrale Wärmeerzeugung (z. B. private Haushalte) und für die Mobilität (Treibstoff) verbraucht. Zahlreiche Entwicklungen zielen darauf ab, Wasserstoff als alternativen Treibstoff für Fahrzeuge oder als Energieträger zum Beispiel in Kraft-Wärme-Kopplungen für die Heizungen und Stromversorgung in Haushalten einzuführen. Diese Entwicklungen werden vor allem durch die Fortschritte in der Brennstoffzellentechnik getrieben. Mit Wasserstoff, der aus der Vergasung von billiger Biomasse gewonnen werden kann, lassen sich Treibstoffkosten pro gefahrene Kilometer in der Größenordnung konventioneller Treibstoffe (z.B. Benzin) erzielen.

Für eine Wasserstoffwirtschaft zur dezentralen Wärme-, Wärme-Kraft- oder Treibstoffversorgung ist jedoch eine Infrastruktur notwendig, deren Aufbau mit hohen Kosten verbunden ist. Um das Lagervolumen pro gespeicherte bzw. transportierte Energiemenge zu minimieren, sind Druck- und kryogene Behälter zu verwenden und bereits in Einzelfällen realisiert.

Eine weitere Möglichkeit besteht im Aufbau von Leitungsnetzen, wie sie für Erdgas existieren. Im industriellen Bereich werden vereinzelt Leitungsnetze für gasförmigen Wasserstoff mit Transportlängen von mehreren Hundert Kilometern verwendet.

Diskutiert wird auch, bei einer Umstellung auf die Wasserstoffwirtschaft, das Erdgasleitungsnetz mit entsprechender Ertüchtigung zu verwenden. Technisch ist das möglich und entspricht im wesentlichen den in früheren Jahren betriebenen Stadtgasnetzen. Stadtgas enthielt ca. 50 Vol% Wasserstoff.

Die Umstellung des vorhandenen Erdgasnetzes kann nicht schlagartig erfolgen, sondern müsste in Teilnetzen erfolgen. Diese müssten wiederum so groß sein, dass in der Summe der angeschlossenen Einzelabnehmer eine wirtschaftliche Verbrauchsmenge für Wasserstoff vorliegt, für die sich die Investition in eine Wasserstoff-Produktion nach dem Prinzip "economie of scale" lohnt. Alle Verbraucher müssten zum gleichen Zeitpunkt ihre Heizung von Erdgas auf Wasserstoff umstellen. Unter realistischen Annahmen scheint dieser Weg sehr unwahrscheinlich zu sein und würde enorme Vorab-Investitionen mit zeitlich nur schwer kalkulierbarem "Return on Investment" erfordern.

Die Idee der Versorgung von Verbrauchern mit flüssigem Wasserstoff als Energieträger ist grundsätzlich bekannt. Diese Idee wird hauptsächlich auf dem Gebiet der Verkehrsmittel diskutiert, beispielsweise in der DE-A-100 52 856. In dieser Schrift wird vorgeschlagen, die Verdampfungswärme des kryogenen Mediums für die Abkühlung und Verflüssigung eines durch Phasenübergang Energie speichernden Mediums, beispielsweise von Luft, zu nutzen. Dadurch kann die Standzeit für die Lagerung des kryogenen Mediums erheblich verlängert werden. Bei der Befüllung und Entnahme von kryogenem Medium aus dem Speicherbehälter wird das Energie speichernde Medium herangezogen, um die Energiebilanz bei der Lagerung zu verbessern.

Auch der Einsatz von multiplen Energie-Erzeugungs-Speicherungs-Ver sorgungsnetz Haustechnik Solar-/Umweltwärme-Energiegewinn-Systemen ist bereits beschrieben worden. Ein Beispiel dafür findet sich in der DE-A-100 31 491. In diesem Dokument wird jedoch nur sehr allgemein auf vielfältige Möglichkeiten der Ausgestaltung solcher Systeme eingegangen.

Die DE 692 02 950 T2 beschreibt eine Übertragungsleitung für ein kryogenes Fluid. Diese weist thermisch gekoppelte Rohrleitungen zum Transport von kryogenem Fluid und von einem Kühlfluid auf, die mit einer Folie umwickelt sind, welche mit Verbindungseinrichtungen mit der Kühlrohrleitung verbunden ist.

Aus der DE 195 11 383 A1 ist ein Erdgasverflüssigungsverfahren bekannt, das mit einem Verdampfungsverfahren für kryogene Flüssigkeiten gekoppelt ist. Eine Weiterentwicklung dieses Verfahrens wird in der DE 196 41 647 C1 beschrieben.

Die DE 695 19 354 T2 offenbart eine Abgabevorrichtung mit Unterkühler für Kryoflüssigkeit.

Aus der US-A-3,743,854 ist ein System bekannt, das die kombinierte Übertragung von petrochemischen Flüssigkeiten und elektrischem Strom gestattet.

Schließlich offenbart die DE-A-2,013,983 ein Leitungssystem zur Übertragung von elektrischer Energie, von Kälteleistung oder zum Transport technischer Gase, das zum Aufbau eines umfangreichen Leitungsnetzes mit unterschiedlichen Funktionalitäten eingesetzt werden kann. Die US-A-5307639 offenbart eine Leitungskomponente mit den merkmalen aus dem Oberbegriff des Anspruchs 1. Alle diese vorbekannten Systeme und Komponenten dafür haben sich bislang in der Praxis nicht durchsetzen können. Ein Grund dafür mag darin liegen, dass deren Einsatz bislang nicht wirtschaftlich ist. Es besteht somit noch immer ein Bedarf an einem Leitungssystem, dass einfach zu verlegen ist und dass sich äußerst wirtschaftlich betreiben läßt.

Ausgehend von diesem Stand der Technik ist es Aufgabe der vorliegenden Erfindung, eine Leitungskomponente für ein Energienetz und ein Verfahren zum Betrieb eines Energienetzes bereit zu stellen, durch das die technischen, wirtschaftlichen und gesellschaftlichen Hürden im schrittweisen Aufbau einer durch kryogene Energieträger betriebenen Wirtschaft insbesondere einer Wasserstoff-Wirtschaft, überwunden werden können.

Eine weitere Aufgabe der vorliegenden Erfindung besteht in der Bereitstellung einer Leitungskomponente für ein Energienetz und in deren Betrieb, wobei das Energienetz ausgehend von Insellösungen zu einem Verteilungsnetz aufgebaut werden kann, und in das sukzessive emeuerbare Energiequellen integriert werden können.

Noch eine weitere Aufgabe der vorliegenden Erfindung besteht in der Bereitstellung einer Leitungskomponente für ein Energienetz und in deren Betrieb, in die neben Funktionen des Transports von Energieträgern weitere Netzfunktionen, wie zum Beispiel Funktionen der Informationsübertragung, der Ermittlung von Betriebsgrößen des Energienetzes oder des Stromtransports, integriert werden können, wodurch die Wirtschaftlichkeit des Netzes erhöht wird und sich weitere Zukunftsperspektiven eröffnen.

Die vorliegende Erfindung betrifft eine Leitungskomponente für ein Energienetz umfassend mindestens eine erste Leitung für einen zumindest teilweise flüssigen kryogenen Energieträger und mindestens eine zweite Leitung für ein bei der Temperatur des flüssigen kryogenen Energieträgers flüssiges Wärmeüberträgermedium, die parallel zur ersten Leitung verläuft, sowie an den Enden der zweiten Leitung vorgesehene und mit der ersten Leitung in thermischem Kontakt stehende Wärmetauscher zum Erwärmen und/oder Verdampfen des Wärmeüberträgermediums beim Einleiten des kryogenen Mediums in die erste Leitung und zum Abkühlen und/oder Kondensieren des Wärmeüberträgermediums bei der Entnahme des kryogenen Mediums aus der ersten Leitung.

Die Erfindung betrifft zusätzlich auch ein Energienetz, das eine erfindungsgemäße Leitungskomponente umfasst.

Die Erfindung betrifft außerdem ein Verfahren zum Leitungstransport von kryogenen Energieträgern in einer erfindungsgemäßen Leitungskomponente umfassend die Schritte Einspeisen eines gasförmigen und/oder flüssigen kryogenen Energieträgers in eine erste Leitung, Abkühlung und gegebenenfalls Verflüssigung des flüssigen kryogenen Energieträgers am Ort der Einspeisung in die erste Leitung durch Übertragung von thermischer Energie von dem kryogenen Energieträger auf ein flüssiges Wärmeüberträgermedium in einer zweiten Leitung, die mit einem ersten Wärmetauscher in Verbindung steht, wodurch das Wärmeüberträgermedium verdampft und aus der zweiten Leitung ausgeschleust wird, Transport des flüssigen kryogenen Energieträgers durch die erste Leitung, Transport des flüssigen Wärmeüberträgermediums durch die zweite Leitung im Gegenstrom zum kryogenen Energieträger, Verdampfen des flüssigen kryogenen Energieträgers am Ort der Ausschleusung aus der ersten Leitung durch Übertragung von thermischer Energie von dem gasförmigen Wärmeüberträgermedium auf den flüssigen kryogenen Energieträger in der ersten Leitung, die mit einem zweiten Wärmetauscher in Verbindung steht, wodurch das Wärmeüberträgermedium verflüssigt und in die zweite Leitung eingeschleust wird, und Ausschleusen des gasförmigen kryogenen Energieträgers aus der ersten Leitung.

Mit der vorliegenden Erfindung wird also vorgeschlagen, die Verdampfungswärme des kryogenen Energieträgers für die Abkühlung und Verflüssigung eines durch Phasenübergang Energie speichernden Wärmeüberträgermediums, beispielsweise Luft, für den Betrieb der Leitung von kryogenen Energieträgern zu nutzen, in dem beim Verbraucher sowie beim Speicher für den kryogenen Energieträger Wärmetauscher montiert sind. Über den beim Verbraucher vorgesehenen Wärmetauscher wird der kryogene Energieträger verdampft und auf Umgebungstemperatur erwärmt. Die notwenige thermische Energie wird mittels des Wärmetauschers einem Wärmeüberträgermedium, beispielsweise einem Luftstrom entzogen, der dadurch abgekühlt und insbesondere verflüssigt wird. Dieses abgekühlte und vorzugsweise flüssige Wärmeüberträgermedium wird in die zweite Leitung eingespeist und kann so im Gegenstrom bis zum Einspeiseort des flüssigen kryogenen Energieträgers transportiert werden. Dort steht das abgekühlte und vorzugsweise flüssige Wärmeüberträgermedium wiederum zur Abkühlung und gegebenenfalls Verflüssigung des krogenen Energieträgers zur Verfügung. Ferner wirkt das abgekühlte und vorzugsweise flüssige Wärmeüberträgermedium beim Transport durch die zweite Leitung als Wärmeschild für den in der ersten Leitung transportierten flüssigen kryogenen Energieträger. Dadurch wird die Energiebilanz des Systems wesentlich verbessert. Die Verluste werden weitgehend nur durch den Druckverlust und den Wärmeeinfall in die Transportleitung bestimmt, was durch gute Isolierung minimiert werden kann, sowie durch die Exergieverluste beim Wärmeaustausch also bei der Verflüssigung sowie Verdampfung an den Einspeise- und Abnahmestellen.

Um die Exergieverluste zu minimieren wird vorgeschlagen, für den Wärmeaustausch Mikrowärmetauscher zu verwenden. Diese zeichnen sich durch sehr hohe Oberflächen-Volumen-Verhältnisse aus und können bei sehr kleinen Bauvolumen sehr große Wärmemengen übertragen. Damit können sehr kleine Temperaturdifferenzen für das treibende Gefälle der Wärmeübertragung gewählt werden, was die Exergieverluste minimiert. Zusätzliche Vorteile ergeben sich durch das sehr kleine Bauvolumen und die hohe Sicherheit ("inhärente Sicherheit"), was die verfahrenstechnischen Apparate der Mikrotechnik im Besonderen auszeichnet (siehe Ehrfeld, W.; u.a.: Microreactors. WILEY-VCH Verlag GmbH, Weinheim, 2000).

Bei der erfindungsgemäßen Leitungskomponente kann es sich um ein Rohrleitungssystem handeln, in dem Wasserstoff in flüssiger, kryogener Form (beispielsweise unter 21 Kelvin entsprechend -253°C) transportiert werden kann. In flüssiger Form hat Wasserstoff eine Energiedichte von ca. 2,3 Kilowattstunden pro Liter Flüssigkeit. Das ist deutlich weniger als die Energiedichte von Öl mit ca. 10 Kilowattstunden pro Liter, so dass der Transport per Tankwagen unwirtschaftlicher ist. Bei einem kontinuierlichen Fluss durch Rohrleitungen verschwindet dieser Nachteil und es sind im flüssigen Zustand pro transportierte Leistungseinheit nur sehr kleine Durchmesser der Rohrleitungen notwendig. Dies soll am Beispiel eines Einfamilienhauses demonstriert werden:

Es wird angenommen, dass der jährliche Energieverbrauch für Wärme und Strom in Summe etwa 30.000 kWh/a beträgt. Wenn idealer Weise vereinfacht eine konstante Abnahme angenommen wird, ergäbe sich bei 8760 Stunden Nutzungsdauer im Jahr eine notwendige Übertragungsleistung von 3,42 kW. Mit dem unteren Heizwert von 2,33 kWh pro Liter kryogenem Wasserstoff errechnet sich ein Durchfluss von 1,47 Liter pro Stunde. Bei einer gewählten Fließgeschwindigkeit zwischen 0,1 bis 0,5 Meter pro Sekunde ist ein innerer Rohrdurchmesser zwischen nur 1 bis 2,5 mm ausreichend. Bei einem gewählten Durchmesser von 2 Millimeter, respektive einer Geschwindigkeit von 0,15 Meter pro Sekunde beträgt der Druckverlust in einer 1 Kilometer langen Leitung wegen der niedrigen Viskosität überschlägig weniger als 1 bar. Dieses Beispiel verdeutlicht, dass es dem Fachmann gelingen wird, eine optimale Auslegung eines großen Rohmetzes mit sehr kleinen Leitungsquerschnitten und einem vom Druckverlust abhängigen wirtschaftlichen Betriebsfeld zu finden. Damit wird eine sehr preiswerte und einfache Verlegung eines Rohmetzes möglich, etwa vergleichbar mit der Verlegung von elektrischen Kabeln.

Die erfindungsgemäße Leitungskomponente weist somit vorzugsweise eine erste Leitung auf, deren innerer Durchmesser kleiner gleich 20 mm, vorzugsweise kleiner gleich 10 mm, insbesondere kleiner gleich 5 mm und besonders bevorzugt kleiner gleich 2,5 mm ist. Besonders bevorzugt ist auch der innere Durchmesser der zweiten Leitung kleiner gleich 20 mm, vorzugsweise kleiner gleich 10 mm, insbesondere kleiner gleich 5 mm und besonders kleiner gleich 2,5 mm.

Aufgrund der geringen Abmessungen der erfindungsgemäßen Leitungskomponente kann diese in bereits bestehenden Versorgungsleitungen, vorzugsweise in Erdgasleitungen, verlegt werden.

In einer weiteren bevorzugten Ausführungsform ist die erste Leitung der erfindungsgemäßen Leitungskomponente für ein Energienetz mit mindestens einem Speicher für kryogenen Energieträger sowie mit mindestens einem Verbraucher für kryogenen Energieträger verbunden, wobei direkt vor den Verbraucher gegebenenfalls ein Speicherbehälter für den kryogenen Energieträger geschaltet ist.

Als kryogene Energieträger kommen im Sinne dieser Beschreibung alle Fluide in Betracht, die bei tiefen Temperaturen (in der Regel bei Temperaturen unterhalb von 0°C) in flüssiger Form durch Leitungsnetze transportiert werden können, und die in einem Verbraucher zur Erzeugung von Energie genutzt werden können. Beispiele für kryogene Energieträger sind bei Raumtemperatur gasförmige Kohlenwasserstoffe, wie Methan, Ethan, Propan, Butan oder deren Gemisch, vorzugsweise Erdgas, sowie insbesondere Wasserstoff. Es können auch bei Raumtemperatur gasförmige Gemische von Kohlenwasserstoffen und Wasserstoff eingesetzt werden. Diese können weitere inerte gasförmige Komponenten enthalten, beispielsweise Stickstoff oder Edelgase.

Die Leitung des flüssigen kryogenen Energieträgers durch das Energienetz kann drucklos oder unter Druck erfolgen. Die Druckleitung wird bevorzugt.

Die erste und zweite Leitung der erfindungsgemäßen Leitungskomponente für ein Energienetz kann in Abhängigkeit von der Art und Temperatur des zu transportierenden flüssigen kryogenen Energieträgers entlang ihrer gesamten Länge in einer thermischen isolierenden Umgebung verlaufen. Bei höheren Transporttemperaturen, beispielsweise im Bereich von -50°C oder höher, kann gegebenenfalls auf die thermische Isolierung verzichtet werden. Bei tieferen Transporttemperaturen empfiehlt es sich, die erste und zweite Leitung in einer thermischen isolierenden Umgebung verlaufen zu lassen. Die zweite Leitung hat neben der Funktion des Transports des Wärmeüberträgermediums zur Rückgewinnung von thermischer Energie die Funktion eines Wärmeschildes für das sich in der ersten Leitung befindende flüssige kryogene Medium.

Eine bevorzugte Ausführungsform der erfindungsgemäßen Leitungskomponente umfasst eine parallel zur ersten und zweiten Leitung verlaufende dritte Leitung. Diese kann dem Rücktransport von verdampftem Wärmeüberträgermedium zum zweiten Wärmetauscher dienen oder aber zum Transport von verdampftem kryogenen Medium. Das flüssige kryogene Medium kann beispielsweise am Ort des Einspeisens in die erste Leitung teilweise verdampfen oder aber während des Transports durch die erste Leitung (sogenanntes "boil-off Gas"). Somit können auch unterschiedliche Verbindungen zwischen der ersten Leitung und der dritten Leitung gewählt werden oder die dritte Leitung wird zur Aufnahme von gasförmigem Wärmeüberträgermedium mit dem ersten und zweiten Wärmetauscher verbunden.

Das erfindungsgemäße Energienetz kann neben den Leitungen für den Transport des kryogenen Energieträgers noch weitere an sich bekannte Elemente aufweisen. So sind neben Speichervorrichtungen und Verbrauchern für den kryogenen Energieträger Elemente zum Messen, Überwachen, Steuern und Regeln der Stoffflüsse, insbesondere zur Überwachung der Temperaturen und Drücke sowie Einrichtungen zur Abwendung von kritischen Zuständen, wie zum Beispiel Überdruckentlastungen integrierbar. An den Einspeiseorten können Elemente, wie Pumpen, Verdichter oder Drucksender zum Fördern der Stoffe vorgesehen sein. In Abhängigkeit von der Transportlänge können zum Ausgleich von Druckverlusten Zwischenstationen zum Fördern der Medien installiert werden.

Das erfindungsgemäße Energienetz kann weitere Elemente zur Aufarbeitung und Umwandlung der Energieträger sowie der Wärmeträger umfassen. Beim Verbraucher lässt sich der Energieträger einem Brenner zur Wärmeerzeugung zu führen. Eine bevorzugte Ausführung ist die Versorgung von Brennstoffzellen zur Stromgewinnung. Besonders vorteilhaft ist die kombinierte Strom- und Wärmeerzeugung.

Mit speziellen Vorrichtungen kann der Energieträger zur Betankung von Fahrzeugen genutzt werden.

Mit weiteren Elementen des Energienetzes kann die zugeführte Luft am Ort der Einspeisung oder am Austritt zumindest teilweise in ihre Bestandteile zerlegt werden, so dass Stickstoff oder/und Sauerstoff in höherer Konzentration gewonnen wird. Am Ort der Luftzuführung können Elemente zum Trocknen der Luft und zum Entfernen des aus der Luft abgetrennten Wassers vorgesehen sein.

Das Energienetz umfasst weiterhin Einrichtungen zur Verflüssigung des Energieträgers, bei denen vorzugsweise der Wärmeträger für die Verbesserung des Wirkungsgrades der Verflüssigung verwendet wird. Hierzu sind Elemente für den Wärmeaustausch oder/und Elemente zur Gewinnung von Expansionsarbeit durch die Erwärmung des Wärmeträgers zu integrieren.

Eine erweiterte Ausführung des erfindungsgemäßen Energienetzes schließt die Erzeugung des Energieträgers insbesondere von Wasserstoff ein. Dies können Reformer zur Gewinnung von Wasserstoff aus Kohlenwasserstoffen oder vorzugsweise Elektrolysezellen zur Spaltung von Wasser sein. Besonders bevorzugt können Elektrolysezellen in dem Energienetz betrieben werden, die mit elektrischem Strom versorgt werden, der zumindest teilweise durch die erfindungsgemäßen Leitungen transportiert wird.

Weitere Elemente des erfindungsgemäßen Energienetzes können Einrichtungen zur Stromerzeugung insbesondere aus erneuerbaren Energien wie Windkraft- oder Photovoltaikanlagen sein. Mit geeigneten Elementen wird der Strom aus diesen Erzeugern zu mindestens teilweise in die erfindungsgemäße Leitung eingespeist. Der mit diesen Anlagen erzeugte Strom kann direkt verbraucht werden oder/und wird Elektrolysezellen zur Gewinnung von Wasserstoff zugeführt.

Das erfindungsgemäße Energienetz lässt sich mit Datennetzen kombinieren, wobei Prozessleitsysteme die Regelung der Energieerzeugungs- und Speichersysteme auf der einen Seite und der Verbrauchersysteme auf der anderen Seite übernehmen, wobei die Systeme miteinander kommunizieren. Die Datenübertragung erfolgt vorzugsweise mit Daten- und Signalleitungen, die in das Leitungssystem integriert sind.

Die schwankende Abnahme von kryogenen Energieträgern beim Verbraucher kann weitestgehend durch kryogene Pufferbehälter an den Leitungsenden oder/und an Knotenpunkten eines Netzes ausgeglichen werden.

Der Betrieb des Energienetzes bei sehr tiefen Temperaturen, beispielsweise bei unter 21 Kelvin, erfordert eine sehr gute Isolation der Leitungen, der Pufferbehälter und der sonstigen Vorrichtungen, die von kryogenem Energieträger durchflossen werden.

Aus der Literatur und der industriellen Praxis sind sehr vielfältige Verfahren und Vorrichtungen für Wärmeisolierungen bekannt. Beispiele dafür sind in VDI Wärmeatlas: Superisolationen. Springerverlag, 8. Auflage 1997, zu finden. Für die Isolierung von tiefkalten Flüssigkeiten sind Superisolationsfolien bekannt. Unter Superisolationen sind Wärmeisolationen zu verstehen, deren Gesamtwärmedurchlässigkeit deutlich kleiner ist als diejenige der ruhenden Luft. Solche Superisolatinsfolien werden zum Beispiel für Flüssigwasserstoff tanks in Kraftfahrzeugen vorgeschlagen (vergl. BMW AG: Zukunft Wasserstoff. Magazin, 2003).

Das erfindungsgemäße Energienetz kann durch starre Rohrleitungen realisiert werden.

Bevorzugt werden jedoch Rohrleitungen eingesetzt, bei denen die Möglichkeit zur kabelartigen Verlegung nicht wesentlich eingeschränkt wird. Beim Einsatz von dünnen und thermisch isolierten Rohrleitungen soll die Isolierung die Leitungen nicht wesentlich verteuern und soll unter den rauen Bedingungen einer Feldverlegung einfach zu handhaben sein. Des Weiteren sollen die Betriebskosten, die durch Tiefkühlung, Wärme- und Druckverluste entstehen, minimiert werden. Für eine Verlegung in kurvigem Gelände soll eine Biegsamkeit gewährleistet sein. Eine preisgünstige Lieferform und Verlegungstechnologie kann beispielsweise dadurch unterstützt werden, dass große Längen der Leitungen auf Trommeln wickelbar sind. An den Verbindungs- und Verzweigungsstellen soll eine sehr einfache Montage und Vor-Ort-Isolierung möglich sein. Der Aufwand für die Kompensation der Ausdehnung oder Kontraktion der Rohrleitungsmaterialien infolge großer Temperaturunterschiede soll möglichst gering sein.

Für diese Zwecke stehen bereits eine Reihe von Lösungsansätzen zur Verfügung. Für gute Isolierungen im Tieftemperaturbereich ist ein Vakuum erforderlich.

Das Material der ersten und zweiten Leitungen kann ein Metall sein oder es kann sich um Kunststoff handeln. Vorzugsweise werden erste und zweite Leitungen so ausgewählt, dass sie bei Raumtemperatur biegsam sind und einfach verlegt werden können. Die Flexibilität der ersten und zweiten Leitungen kann durch die Art des Materials und/oder durch die Dimensionierung der Leitungen in an sich bekannter Weise erfolgen.

Eine bevorzugte Ausführungsform des erfindungsgemäßen Energienetzes umfaßt eine erste und zweite Leitung, die von einem Mantel umgeben sind und eine Rohrleitung bilden, in der sich nach der Verbiegung und durch die Abkühlung der Rohrleitung während der Inbetriebnahme ein Vakuum ausbildet Derartige Rohrleitungen umfassen einen von dem Mantel gebildeten gasdichten Raum, der vor der Ausbildung des Vakuums mit einem Gas gefüllt ist, dessen Dampfdruck sich bei der Abkühlung stark erniedrigt. Vorzugsweise wird ein Gas verwendet, das bei der Abkühlung durch Kondensation vom gasförmigen direkt in den festen Aggregatzustand übergeführt wird. Kohlendioxid ist hierfür bestens geeignet.

Rohrleitungen des oben beschriebenen Typs sind grundsätzlich aus der EP 0 412 715 A1 bekannt. Diese Schrift beschreibt die partielle Vakuumisolierung durch Verwendung von kondensiertem Kohlendioxid. Dabei sind jedoch Kohlendioxidblasen in eine Polyurethan-Schicht eingeschlossen, mit der das tiefkalte Rohr dünn beschichtet ist. Zwischen dieser Beschichtung und einem äußeren Rohr befindet sich eine Inertgas enthaltende Pulverfüllung.

In einer bevorzugten Ausführungsform des erfindungsgemäßen Energienetzes werden Rohrleitungen eingesetzt, die parallel zueinander verlaufende erste, zweite und gegebenenfalls dritte Leitungen umfassen, wobei wenigstens die erste Leitung, vorzugsweise die erste und die zweite Leitung von mindestens zwei auf Abstand gehaltene Isolationsfolien umhüllt ist, die einen evakuierbaren Raum ausbilden, in dem sich ein bei tiefen Temperaturen durch Kondensation verfestigendes Material, vorzugsweise Kohlendioxid, und/oder ein durch Adsorption an ein Gettermaterial entfernbares Gas sowie ein Gettermaterial befindet, und wobei erste, zweite gegebenenfalls dritte Leitung und Isolationsfolien von einer thermisch isolierenden Hülle umgeben sind.

Als Kombinationen von Gettermaterial / adsorbierbares Gas eigenen sich beispielsweise Metallhydride / Wasserstoff.

In einer bevorzugten Ausführungsform ist mindestens eine der Isolationsfolien mit einer dünnen Metallschicht beschichtet.

Besonders bevorzugt können die erste, zweite und gegebenenfalls dritte Leitung zusätzlich noch mit einer Schicht aus Schaumstoff umhüllt sein.

Besonders bevorzugt enthält der zwischen den Isolationsfolien ausgebildete evakuierbare Raum neben dem kondensierbaren Gas noch ein feinteiliges Isolationsmaterial, insbesondere Kieselsäurepulver, mineralische Fasern oder feinteilige Schaumstoffe.

Rohrleitungen dieses Typs sind neu und ebenfalls Gegenstand der vorliegenden Erfindung.

Der Raum, in dem die Evakuierung durch Kondensation erfolgt, muss dabei sein Ausgangsvolumen im Wesentlichen beibehalten, damit sich der Unterdruck aufbauen kann. Zur Herstellung eines solchen Raumes können an sich bekannte Vakuum-Isolationsfolien verwendet werden, die als Vakuumbänder oder als Vakuum-Plattenfolien um Rohrleitungen gewickelt oder extrudiert werden. Bei diesen lsolierfolien werden sehr gute Wärmeisolatoren, wie zum Beispiel poröses Kieselsäurepulver oder mineralische Fasern, zwischen zwei Folienflächen vakuumdicht verschlossen. Nach dem Stand der Technik wird die Evakuierung während der Herstellung des Verbundes mit den Isolationsfolien durchgeführt. Dadurch wird der durch das poröse Material gebildete Füllkörper relativ starr. Die Umwicklung der Rohre wird erschwert. Es können viele Knicke entstehen, die unkontrollierbare Wärmebrücken bilden. Es besteht die Gefahr, dass die evakuierten steifen Isolationsfolien bei der Weiterverarbeitung für die Rohrumwickelung, beim Transport und bei der Verlegung der isolierten Rohre beschädigt werden und ihre Isolationswirkung verlieren.

Diese Nachteile werden überwunden, wenn das Vakuum der Isolation erst im Betriebszustand der verlegten Leitungen in situ entsteht. Hierfür wird der Porenraum zwischen den Isolationsfolien während der Herstellung z.B. mit Kohlendioxid gefüllt, das im tiefkalten Zustand als Feststoff ("Trockeneis") vorliegt.

Unter Umgebungstemperaturen sind die Isolationsfolien, die zum Beispiel mit Kieselsäurepulver gefüllt sind, sowie die von diesen Isolationsfolien umhüllten Leitungen somit weich und gut verarbeitbar. Solche Leitungen können auf Trommeln gewickelt werden und sind somit "trommelbar". Erst wenn die Leitungen verlegt sind und in Betrieb genommen werden bildet sich das Vakuum aus, durch das die Isolation starr wird. Auf den Baustellen können Verbindungs- und Verzweigungsstellen mit solchen Folienbändern umwickelt werden, was die Montage sehr vereinfacht und dennoch eine gute Isolationswirkung im Betrieb der Leitungen und Vorrichtungen bewirkt. Zum Schutz vor Beschädigungen und zur Aufrechterhaltung der Dichtigkeit stehen dem Fachmann vielfältige Möglichkeiten offen, um lange Lebensdauern der verlegten Rohrleitungen zu gewährleisten. Das können Schutzmäntel aus Metall, ähnlich wie sie bei Fernwärmerohrleitungen verwendet werden, oder Kunststoffumhüllungen sein.

Mehrlagige Ausführungen und weitere bekannte Maßnahmen, wie Wärmeschilder und Metallbeschichtungen der Folien können die Wirkung weiter verbessern und neben der Wärmeisolation auch Strahlungs- und elektrische Isolationen beinhalten.

Ein Nachteil des Transports von flüssigen kryogenen Energieträgern durch Rohrleitungen ist der zusätzliche Energieaufwand für die Verflüssigung. Bezogen auf den Heizwert von Wasserstoff werden für die Verflüssigung ca. 30 bis 40% Energieaufwand benötigt. Dieser Nachteil kann durch die oben beschriebenen Maßnahmen erheblich verringert werden. Die sehr kleinen Leitungsdurchmesser und die oben beschriebenen flexiblen Isolationsmethoden ermöglichen zwei oder mehrere dünne Rohleitungen in einem Verbund zu vereinigen.

Solche Verbundleitungen sind als flexible Multi-Rohrleitungen aus der Tiefsee-Ölförderung bekannt und zum Beispiel in US-A-6,102,077 beschrieben. Die vorbekannten Rohrleitungssysteme sind allerdings in der Ausführung nicht für den Einsatz bei Tieftemperaturleitung geeignet.

Eine weitere für den Einsatz im erfindungsgemäßen Energienetz geeignete Transportleitung für kryogene Fluide beschreibt DE-A-199 06 876. Hierin werden zwei voneinander thermisch isolierte einzelne Rohre verwendet, die gemeinsam, vorzugsweise mit einem Metallrohr, ummantelt sind. Das Innenvolumen der rohrförmigen Ummantelung ist evakuiert und es wird Material der Innenrohre mit kleinen thermischen Ausdehnungskoeffizienten eingesetzt.

Beim erfindungsgemäßen Energienetz muss auf die Ausdehnungskompensation nicht verzichtet werden. Durch die biegsame Verlegung können natürliche Ausdehnungsabschnitte, wie sie bei konventioneller Rohrleitungsverlegung bekannt sind, ohne wesentliche Kostennachteile vorgesehen werden.

Die Verwendung dünner Rohrleitungen für den Transport kryogener Flüssigkeiten, die einfache Isolierung durch in situ Evakuierung, die flexible

Verlegung und die Vereinigung von mehreren Rohren zu einer Multi-Rohrleitung machen den Nachteil des Verflüssigungsaufwandes überwindbar.

Erfindungsgemäß wird vorgeschlagen, mindestens zwei Rohrleitungen in einer Trasse zu vereinigen, bei der eine Rohrleitung den flüssigen kryogenen Energieträger, vorzugsweise Wasserstoff, transportiert und im Gegenstrom in einer zweiten Rohrleitung eine weitere kryogene Flüssigkeit als Wärmeüberträgermedium transportiert wird. Vorzugsweise ist diese zweite kryogene Flüssigkeit Stickstoff oder insbesondere Luft.

Das Wärmeüberträgermedium wird vorzugsweise am Ort der Entnahme des kryogenen Energieträgers über einen Wärmetauscher von einem Speicher oder aus der Umgebung unter zumindest teilweiser Verflüssigung in die zweite Leitung eingespeist, durchfließt die zweite Leitung im Gegenstrom zum sich in der ersten Leitung befindenden kryogenen Energieträger, und wird am Ort der Einspeisung des kryogenen Energieträgers in die erste Leitung über einen Wärmetauscher unter Verdampfen aus der zweiten Leitung in einen Speicher oder in die Umgebung ausgespeist. Alternativ kann das Wärmeüberträgermedium in einer dritten Leitung, die von der ersten und zweiten Leitung thermisch isoliert ist, vom Wärmetauscher am Einspeiseort des kryogenen Energieträgers in die erste Leitung zum Wärmetauscher am Ort der Entnahme des kryogenen Energieträgers aus der ersten Leitung zurückgeführt und dort wieder in die zweite Leitung eingespeist werden.

In einer besonders bevorzugten Ausführungsform ist eine dritte Leitung vorgesehen, in der gasförmiger kryogener Energieträger, sogenanntes "boil-off" Gas, transportiert wird. Diese Ausführungsform verbessert die Energiebilanz der erfindungsgemäßen Leitungskomponente nochmals erheblich.

Eine weitere besonders bevorzugte Ausführungsform der Erfindung betrifft den Transport von flüssigem Wasserstoff als kryogenem Energieträger; dabei wird der Wasserstoff am Ort des zweiten Wärmetauschers und/oder an Orten der Ableitung aus der ersten in die dritte Leitung über einen Katalysator geleitet, der die Umwandlung von para-Wasserstoff in ortho-Wasserstoff beschleunigt. Die Umwandlung von para-Wasserstoff in ortho-Wasserstoff ist endotherm. Durch eine örtlich gezielte Aufnahme der Umwandlungsenergie kann der Wirkungsgrad des Systems nochmals gesteigert werden.

Die Erfindung betrifft auch ein Verfahren zum Leitungstransport von kryogenen Energieträgern umfassend die Schritte:
i) Einspeisen eines gasförmigen und/oder flüssigen kryogenen Energieträgers in eine erste Leitung,
ii) Abkühlung und gegebenenfalls Verflüssigung des flüssigen kryogenen Energieträgers am Ort der Einspeisung in die erste Leitung durch Übertragung von thermischer Energie von dem kryogenen Energieträger auf ein flüssiges Wärmeüberträgermedium in einer zweiten Leitung, die mit einem ersten Wärmetauscher in Verbindung steht, wodurch das Wärmeüberträgermedium verdampft und aus der zweiten Leitung ausgeschleust wird,
iii) Transport des flüssigen kryogenen Energieträgers durch die erste Leitung,
iv) Transport des flüssigen Wärmeüberträgermediums durch die zweite Leitung im Gegenstrom zum kryogenen Energieträger,
v) Verdampfen des flüssigen kryogenen Energieträgers am Ort der Ausschleusung aus der ersten Leitung durch Übertragung von thermischer Energie von dem gasförmigen Wärmeüberträgermedium auf den flüssigen kryogenen Energieträger in der ersten Leitung, die mit einem zweiten Wärmetauscher in Verbindung steht, wodurch das Wärmeüberträgermedium verflüssigt und in die zweite Leitung eingeschleust wird, und
vi) Ausschleusen des gasförmigen kryogenen Energieträgers aus der ersten Leitung.

In einer bevorzugten Ausführungsform des Verfahrens wird das gasförmige Wärmeüberträgermedium am Ort des zweiten Wärmetauschers aus der Umgebung in die zweite Leitung eingeführt und am Ort des ersten Wärmetauschers in die Umgebung ausgeschleust.

In einer weiteren bevorzugten Ausführungsform des Verfahrens wird das gasförmige Wärmeüberträgermedium in einer dritten Leitung, die von der ersten und zweiten Leitung thermisch isoliert ist, vom ersten Wärmetauscher zum zweiten Wärmetauscher zurückgeführt und dort in verflüssigter Form in die zweite Leitung wieder eingespeist.

In noch einer weiteren bevorzugten Ausführungsform des Verfahrens wird in einer parallel zur ersten und zweiten Leitung verlaufenden dritten Leitung gasförmiger Energieträger transportiert, der durch Verdampfen von kryogenem Energieträger enstanden ist. Das Einspeisen des gasförmigen Energieträgers kann an einer oder mehreren beliebigen Stellen im Leitungsnetz erfolgen, beispielsweise am Ort des Einspeisens des kryogenen Energieträgers in die erste Leitung oder es kann an einer oder mehreren Stellen der ersten Leitung eine Verbindung mit der dritten Leitung vorgesehen sein, durch die verdampfter Energieträger in die dritte Leitung eingespeist wird. Der gasförmige Energieträger in der dritten Leitung kann an beiden Enden dieser Leitung ausgeschleust werden, um am Ort des Verbrauchers beispielsweise mit dem aus der ersten Leitung ausgeschleusten und verdampften Energieträger verwendet zu werden odere um am Ort des Einspeisens des kryogenen Energieträgers verflüssigt zu werden und in die erste Leitung eingespeist zu werden.

Durch das beschriebene System der Energierückgewinnung ergeben sich zusätzliche Optionen für eine Wasserstoff-Wirtschaft. Die Verflüssigung der Luft beim Verbraucher kann beispielsweise ausgenutzt werden, um den Stickstoff und den Sauerstoff der Luft zu trennen. Der konzentrierte Sauerstoff kann beispielsweise in einer Brennstoffzelle verbraucht werden, was die Brennstoffzelle effizienter macht. In diesem Fall wird nur der flüssige Stickstoff oder sauerstoffarme Luft zum Ort der Wasserstoff-Verflüssigung zurück transportiert. Denkbar ist auch, dass die flüssige Luft an einer zentralen Stelle gesammelt und zerlegt wird und von dort aus der Sauerstoff und der Stickstoff weiteren Verwendungen oder der Vermarktung zugeführt werden.

Der kryogene Transport von Flüssigkeit und die Vereinigung von zwei oder mehreren Rohrleitungen eröffnet die Möglichkeit, das Leitungssystem mit zusätzlichen Übertragungsfunktionen auszustatten, die die Wirtschaftlichkeit weiter erhöhen.

Bekannt sind Multifunktionsleitungen, so genannte "Umbilical-Pipes", die Stoff-, Strom- und Signalleitungen vereinigen. Nach dem gleichen Prinzip sind die beschriebenen kryogenen Leitungen erweiterbar. Im einfachsten Fall können elektrisch leitende Einzelleitungen bei einer vorausgesetzten gegenseitigen Isolierung als elektrische Leiter für Strom- oder Signalübertragungen verwendet werden, so dass keine zusätzlichen Kabel notwendig sind.

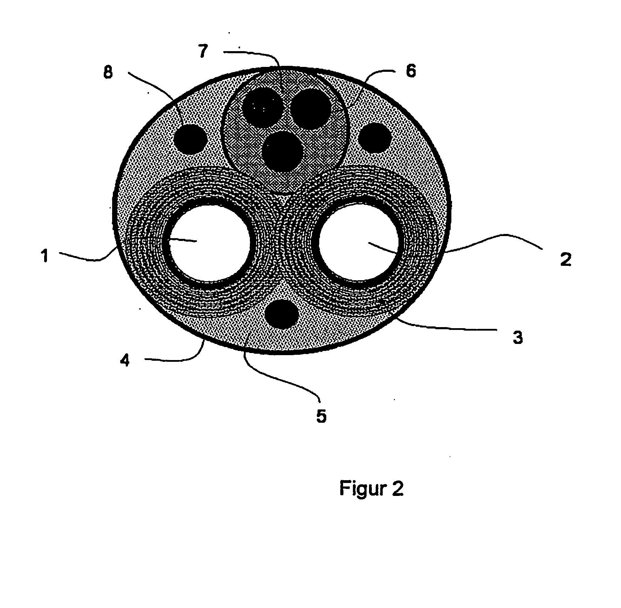

Die besondere Ausführung der Multifunktionsleitungen ("Umbilical") in Kombination mit dem Stofftransport von kryogenen flüssigen Energieträgern wird im Weiteren als "Kryumbilical" bezeichnet. Eine Variante mit parallelen Stoff-, Strom- und Signalleitungen zeigt Figur 2. Als Signalleiter können elektrische Leiter oder auch Glasfasern in Betracht kommen.

Als eine besonders vorteilhafte Ausführung von Kryumbilicals wird vorgeschlagen, die für den Transport von Wasserstoff ohnehin vorliegenden tiefen Temperaturen bis unter 21 K gleichzeitig für Supraleitungen der Strom- und Signalübertragung auszunutzen. Bekannt sind Hochtemperatur Supraleitungen, die bereits bei -135°C ihren elektrischen Widerstand verlieren. Hier sind Materialien ausreichend, die oberhalb einer Temperatur von flüssiger Luft, beispielsweise bei 80 Kelvin wirksam sind. Je tiefer die Temperatur ist, desto mehr sind solche Materialien verfügbar. Solche Supraleiter können parallel im Wärmekontakt mit den tiefkalten Rohrleitungen angebracht werden - beispielsweise durch umwickeln oder beschichten der Rohrleitungen mit diesen Materialien oder als separate Kabel.

Es ist bekannt, dass durch Supraleiter die Übertragungsleistung von Hochfrequenzenergie deutlich erhöht wird und die Verluste drastisch sinken. Es sind auch Demonstrationen von Supraleiter-Komponenten für Elektrizitätsnetze mit guten Erfolgen bekannt. So wird in Ullmann's Encyclopedia of Industrial Chemistry, 5. Edition, Vol. A 25, S. 734 ein dreiphasiges Hochtemperatur Supraleitungskabel dargestellt, bei dem flüssiger Stickstoff zur Kühlung verwendet wird.

Nachteilig an diesen Entwicklungen ist, dass die notwendige Tieftemperatur zusätzlichen technischen und wirtschaftlichen Aufwand hervorruft.

Aus DE 195 01 332 A1 ist bekannt, koaxiale Rohrsysteme als supraleitende Hochfrequenzkabel zu verwenden, wobei für die Kühlung im Innenrohr des koaxialen Systems fließender flüssiger Stickstoff verwendet wird.

Im Gegensatz hierzu soll mit dem erfindungsgemäßen Energienetz eine breitflächige Anwendung und die Versorgung beliebiger Verbraucher, wie privater Haushalte, wirtschaftlich möglich sein. In der hier vorgeschlagenen bevorzugten Ausführung - in der gleichzeitigen Verwendung der Leitungen für kryogene Energieträger und zur Strom- bzw. Signalübertragung wird dieser Nachteil überwunden, weil eine Kostenteilung erfolgen kann.

Die Kombination von Übertragungsfunktionen eröffnet weitere Vorteile für ein Leitungsnetz für kryogene Energieträger. An jeder Stelle des Leitungsnetzes steht in der multifunktionalen Ausführung elektrische Energie und die Möglichkeit zur Signalübertragung für Mess-, Steuer- und Regelzwecke zur Verfügung. Damit können zum Beispiel Funktionen aufgebaut werden, die die Betriebssicherheit und die Funktionalität der Leitungen und des Netzes weiter erhöhen. Das können zum Beispiel Ventilsteuerungen an Verzweigungsstellen oder die Überwachung von Betriebsparametern, wie Druck, Temperatur oder Leckagen sein. Da ein Wärmeeintrag über die Isolierung nicht völlig ausgeschlossen werden kann, ist auch denkbar, in periodischen Abständen Kältemaschinen zu betreiben. Als besondere Ausführung empfehlen sich Kälteerzeuger, die nach dem Gifford-McMahon-Prinzip arbeiten. Sie zeichnen sich durch hohe Zuverlässigkeit und lange Lebensdauer aus und werden deshalb u. a. in der Raumfahrt eingesetzt.

In einer speziellen Ausführung der erfindungsgemäßen Leitungskomponente wird als Wärmetauscher ein Pulsationsrohr, auch Pulsröhrenkühler genannt, verwendet. Eine sehr vorteilhafte Anwendung und Ausführung von Pulsröhrenkühlem ergibt sich in der Kombination mit den oben beschriebenen Kryumbilicals.

In den Figuren wird die Erfindung näher dargestellt. Eine Begrenzung ist dadurch nicht beabsichtigt.

Es zeigen:
Figur 1: Prinzipskizze des erfindungsgemäßen Energienetzes
Figur 2: Eine Ausführungsform eines "Kryumbilicals" mit parallelen Stoff-, Strom- und Signalleitungen im Querschnitt
Figur 3: Eine weitere Ausführungsform eines "Kryumbilicals" mit parallelen Stoffleitungen sowie einer Leitung für "boil-off Gas im Querschnitt Figur 4: Die Ausführungsform eines weiteren "Kryumbilicals" mit parallelen Stoff-, Strom- und Signalleitungen sowie einer Leitung für "boil-off" Gas im Querschnitt
Figur 5: Eine Ausführungsform für die Integration eines doppelten Pulsationsrohres in ein Kryumbilical im Längsschnitt

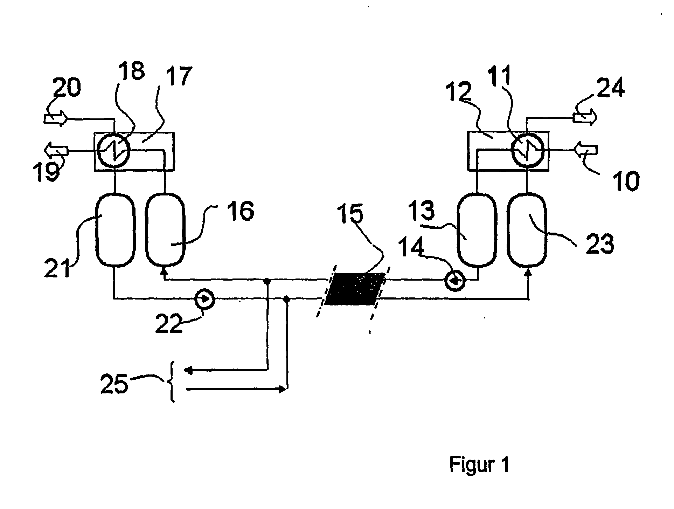

Figur 1 zeigt stark vereinfacht eine Systemvariante, bei der Wasserstoffgas über eine Wasserstoffgas-Zuführung (10) eingespeist, durch Einsatz eines Wärmetauschers (11) in einem Verflüssiger / Verdampfer (12) verflüssigt und über ein Rohrleitungssystem (15) an den / die Verbraucher geleitet wird. Im Gegenstrom wird gasförmige Luft (20) über eine Luftzufuhr durch Wärmetauscher (18) geleitet, der sich in einem Verflüssiger / Verdampfer (17) befindet, dort verflüssigt, in dem Rohrleitungssystem (15) zurückgeführt und über Wärmetauscher (11) für die Wärmeaufnahme bei der Verflüssigung von Wasserstoff verwendet und als gasförmige Luft (24) aus dem System ausgeschleust. Im Verflüssiger /Verdampfer (17) erfolgt parallel zur. Verflüssigung der Luft das Verdampfen des flüssigen Wasserstoffes, der als gasförmiger Wasserstoff (19) dem Verbraucher zugeleitet wird.

Figur 1 zeigt weiterhin Pufferbehälter (13, 16, 21, 23) für Wasserstoff bzw. Luft sowie Pumpen (14, 22). Das Rohrleitungssystem (15) enthält darüber hinaus noch Verzweigungen (25) zu weiteren Verbrauchern.

Figur 2 zeigt ein Beispiel für ein Kryumbilical im Querschnitt. Dargestellt sind eine Rohrleitung für kryogenen Wasserstoff (erste Leitung; (1)), eine Rohrleitung für kryogene Luft (zweite Leitung; (2)), eine Folienisolierung mit CO₂-Einschluss (3), der Außenmantel (4), Isoliermaterial (5), elektrische Kabel (6), elektrische Isolierung (7) sowie Signalleitungen (8).

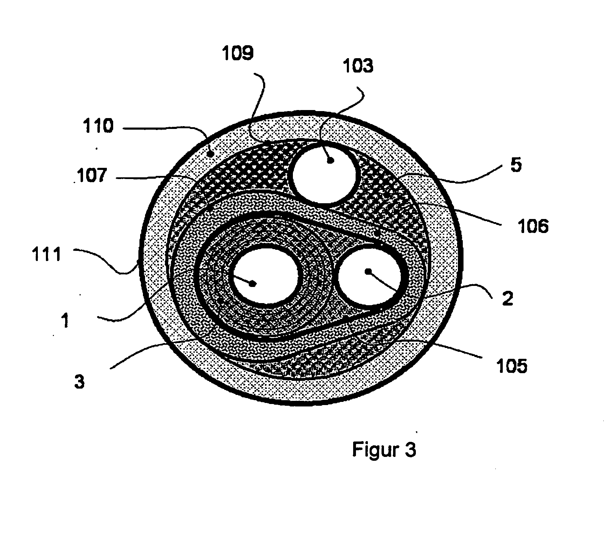

Figur 3 zeigt ein weiteres Beispiel für ein Kryumbilical im Querschnitt. Dargestellt sind eine Rohrleitung für kryogenen Wasserstoff (erste Leitung; (1)), eine Rohrleitung für kryogenen Wärmeträger, z.B. Luft oder Stickstoff (zweite Leitung; (2)), eine Rohrleitung für einen gasförmigen Energieträger, z.B. "boil-off" Gas (dritte Leitung; (103)); eine Folienisolierung mit CO₂-Einschluss (3); ein Wärmeschild (105) aus wärmeleitendem Material, z.B. eine Kupferfolie; eine Superisolation (106) der Wärmeträgerleitungen; gasdichte Zwischenhüllen (107); eine Isolation (5); eine weitere gasdichte Zwischenhülle (109); ein isolierender Außenmantel (110); und eine äußere Schutzschicht (111).

Das in Figur 3 dargestellte Kryumbilical weist drei Stoffstromleitungen auf. In der ersten Leitung (1) wird kryogener Wasserstoff geführt. Diese Leitung ist mit einer Folienisolierung (3) ummantelt. Eine zweite Leitung (2) führt kryogene Luft und ist gemeinsam mit der isolierten ersten Leitung mit einem wärmeleitenden Material (105) ummantelt, das als Wärmeschild wirkt. Wärme, die von außen eindringt und auf das Wärmeschild trifft, wird mindestens teilweise durch das wärmeleitende Material (105) zur zweiten Rohrleitung (2) geleitet. Das Wärmeträgermedium (z.B. flüssige Luft) in der zweiten Leitung nimmt diese Wärme auf und transportiert die Wärme ab. Dabei kann Wärme durch Teilverdampfung der Luft aufgenommen werden. Die verdampfte Luft wird in Abständen längs der Rohrleitung aus dem System entfernt (hier nicht dargestellt). Das Wärmeschild (105) ist wiederum in eine Superisolation (106) eingepackt, die mit einer gasdichten Hülle (107) verschlossen wird. Eine dritte Leitung (103) nimmt in dieser Ausführung gasförmigen Wasserstoff auf, der längs des Transportweges aus der ersten Leitung entfernt wird (hier nicht dargestellt). Dargestellt sind weitere Isolationsmaterialien (110) eine weitere gasdichte Hülle (109) und eine äußere Schutzschicht bzw. der Außenmantel (111).

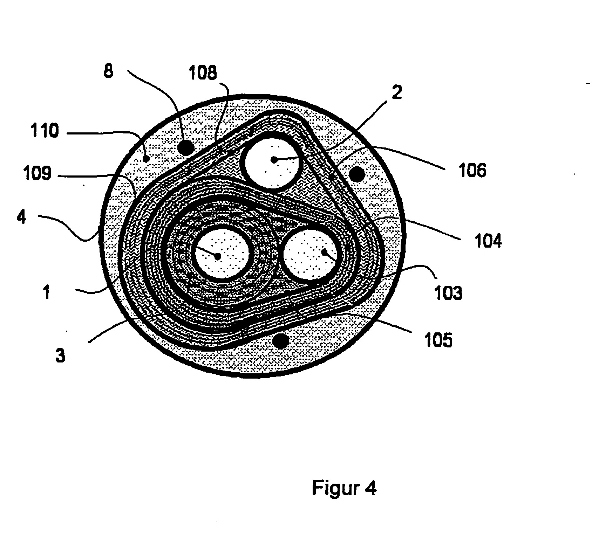

Das in Figur 4 dargestellte Kryumbilical weist ebenfalls drei Stoffstromleitungen auf. Im Unterschied zu dem Beispiel in Figur 3 sind die Leitung (2) für den kryogenen Wärmeträger und die Leitung (103) für den gasförmigen Energieträger vertauscht. Ein weiteres Wärmeschild (108) ummantelt die inneren isolierten Leitungen des flüssigen Energieträgers (1) und des gasförmigen Energieträgers (103). Das äußere Wärmeschild ist mit einer Superisolation (106) und einer gasdichten Hülle (109) umgeben. Die Leitung (103) nimmt gasförmigen Wasserstoff auf, der längs des Transportweges aus der ersten Leitung (1) entfernt wird oder der am Ort der Entnahme des flüssigen Energieträgers in die Leitung für den gasförmigen Energieträger eingespeist und zurückgeführt wird. In der Ausführung stellt sich eine Temperatur des gasförmigen Energieträgers ein, die zwischen der Temperatur des flüssigen Energieträgers in Leitung (1) und des Wärmeträgers in Leitung (2) liegt.

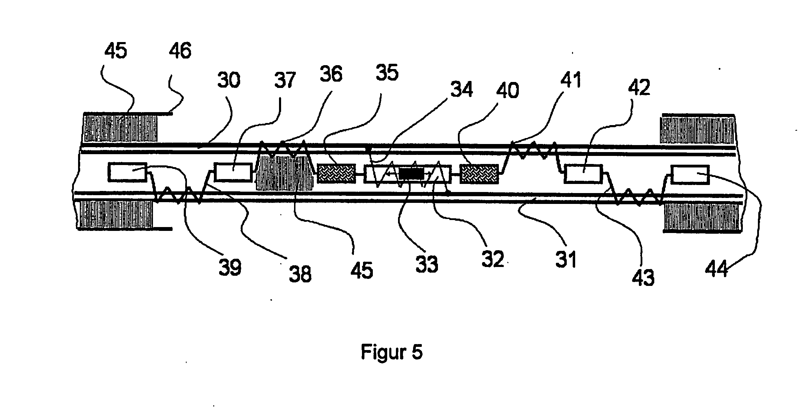

In Figur 5 ist eine Ausführungsform für die Integration eines doppelten Pulsationsrohres in ein Kryumbilical im Längsschnitt dargestellt.

Figur 5 zeigt eine Leitung (30) für kryogenen Wasserstoff, eine Leitung (31) für flüssige Luft, einen Kompressor-Zylinder (32), einen Kompressor-Kolben (33), einen Elektromagneten (34), Regeneratoren (35, 40), Kühler (36, 41), Pulsrohre (37, 42), Wärmeabgaben (38, 43), Puffer (39, 44), eine Isolation (angedeutet, 45) sowie einen Außenmantel (46).

Eine Ausführung eines Pulsröhrenkühlers besteht aus einem Kompressor, einem Regenerator, einer Pulsröhre und gegebenenfalls einem Speicher. Als Kältemittel wird vorzugsweise Helium-Gas verwendet. Die Kompression des Heliums kann auch weit entfernt durchgeführt werden. In diesem Fall sind jedoch Ventile am Ein- bzw. Auslass des Regenerators notwendig, die getaktet das komprimierte Gas einlassen und das entspannte Gas auslassen. In der in Figur 5 dargestellten Ausführungsform befindet sich der Kompressor in unmittelbarer Nähe des Pulsationsrohres. Wenn der Kompressor als oszillierender Kolbenverdichter arbeitet, werden keine Ventile benötigt. Ein Nachteil ist jedoch, dass zwischen dem Zylinder und dem Kolben Leckagen auftreten können. Durch den Verlust von Helium geht die Wärmepumpwirkung verloren. Dieser Nachteil wird durch eine spiegelbildliche Ausführung des Pulsrohrkühlers mit einem Kompressor (32, 33) und zwei Pulsationsröhren (37, 42) einschließlich zwei Regeneratoren (35, 40) überwunden. Die Oszillation des Kolbens (33) wird durch ein außen angelegtes, in der Kraftwirkung wechselndes elektrisches Magnetfeld (34) erzeugt. Die Steuerung dieses Antriebs ist in Figur 5 nicht dargestellt. Es ist ersichtlich, das der mit Helium gefüllte Raum geschlossen ist und keine Leckage aus dem Gesamtsystem - auftreten kann. Es können kleine innere Leckagen zwischen Kolben und Zylinder zu gelassen werden. Das erlaubt genügend große Toleranzen zwischen Kolben und Zylinder. Die Herstellung wird einfacher und die Funktionssicherheit ("Kolbenklemmer") wird erhöht. Eine ähnliche Ausführung wird in DE 42 20 640 A1 beschrieben. In diesem Beispiel wird auch eine gemeinsame Expansionsmaschine in einer doppelt wirkenden Kolben-Zylinder Anordnung vorgeschlagen. Die Integration in eine Wärme abgebende und Wärme aufnehmende Umgebung wird nicht beschrieben.

Aus der in Figur 5 dargestellten Ausführungsform für die Integration eines doppelten Pulsationsrohres in ein Kryumbilical wird deutlich, dass in dieser Kombination ein Wärmepumpensystem in sehr kleinen radialen Abmessungen ausführbar wird. Das Volumen und damit die Leistung des Systems läßt sich in axialer Richtung ausdehnen. Mehrstufige Ausführungen können axial hintereinander gelagert werden.

In der Kombination mit einer Kryumbilical - bei der neben der Wasserstoffleitung (30) mindestens eine zweite Rohrleitung (31)vorhanden ist, die auf einem tiefen Temperaturniveau betrieben wird, beispielsweise durch den Transport von flüssigem Stickstoff oder flüssiger Luft - muss die verwendete Wärmepumpe nur eine geringe Temperaturdifferenz überwinden, indem die aus der Wasserstoffleitung aufgenommene Wärme (36, 41) an die zweite Leitung auf höherem Niveau abgegeben (38, 43) wird. Der in der zweiten Leitung fließende Stoff, z.B. Stickstoff, transportiert diese Wärme ab. Das Wärmepumpsystem kann dadurch ein- oder mehrstufig mit kleinen Temperaturdifferenzen betrieben werden und wird dadurch sehr effizient.

Oben wurde vorgeschlagen, beispielsweise an Verzweigungs- und Knotenpunkten eines Kryumbilical-Netzes Pufferspeicher zu verwenden. Vorteilhaft lassen sich diese Pufferspeicher mit Wärmetauschern ausstatten, so dass auch an diesen Stellen Wärmepumpen integrierbar sind.

Die Verfahren und Vorrichtungen zum Transport von flüssigem Wasserstoff können prinzipiell auch zum Transport von flüssigem Ergas verwendet werden. Erdgas siedet bei etwa 115 Kelvin, so dass einschränkend die Supraleitung erst möglich wird, wenn Materialien in diesem Temperaturbereich gefunden werden. Dennoch ist auch in diesem Fall die Stromleitung über die metallischen Rohrleitungen oder über parallele Kabel in den Kryumbilicals möglich. Die Verlegung von Kryumbilicals für den Transport von flüssigem Erdgas kann eine attraktive Zwischenlösung für die eingangs beschriebene Umstellung auf eine Wasserstoffwirtschaft sein. So können beispielsweise Haushalte bereits mit Kryumbilicals vernetzt und die Gasheizungen nach dem Stand der Technik betrieben werden.

Zusammenfassend wird vorgeschlagen, Brennstoffe, insbesondere Wasserstoff über lange Strecken in kryogener Form durch Rohrleitungen zu transportieren, in dem der Transport des Brennstoffes mit einem Wärmepumpprozess überlagert wird. Dabei werden sehr lange Distanzen zwischen dem Brennstoffentnahmeort und dem Einspeiseort überwunden. Der Kreislauf des Wärmepumpprozesses ist stofflich getrennt, wobei die Energierückgewinnung durch den Phasenwechsel flüssig-gasförmig und gasförmig-flüssig der transportierten kryogenen Stoffe erfolgt.

Es wird vorgeschlagen, für die Erwärmung und Verdampfung bzw. für die Abkühlung und Kondensation vorzugsweise Mikrowärmetauscher zu verwenden.

Weiterhin wird vorgeschlagen, die tiefkalten Leitungen mit einer Wärmeisolierung zu versehen, bei der die isolierende Evakuierung erst bei der Inbetriebnahme in situ entsteht, indem der gasdichte Hohlraum der Isolierung unter Umgebungsbedingungen mit ein Gas gefüllt ist, das bei den tiefen Temperaturen mindestens teilweise zu Feststoff gefriert. Vorzugsweise wird kondensierendes Kohlendioxid verwendet.

Weiterhin wird vorgeschlagen, mindestens zwei Leitungen in einer gemeinsamen Trasse zu vereinigen und die Rohrleitungen selbst für die Übertragung von elektrischer Energie oder/und Informationssignalen zu verwenden und/oder zusätzliche Kabel für die Strom- bzw, Signalübertragung in die Trasse zu integrieren. Weiterhin wird vorgeschlagen, den tiefkalten Zustand der Brennstoffrohrleitungen auszunutzen, um für die elektrische Energie- und/oder Signalübertragung supraleitende Materialien zu verwenden.

Die multifunktionale Ausführung der Brennstoffleitung ermöglicht es, entlang der Trassenführung Kältemaschinen zu betreiben, die Kälteverluste ausgleichen. Des Weiteren können Mess-, Regel- und Steuerfunktionen integriert werden.

## Patentansprüche

1. Leitungskomponente für ein Energienetz umfassend mindestens eine erste Leitung für einen zumindest teilweise flüssigen kryogenen Energieträger und mindestens eine zweite Leitung für ein bei der Temperatur des flüssigen kryogenen Energieträgers flüssiges Wärmeüberträgermedium, die parallel zur ersten Leitung verläuft,
**dadurch gekennzeichnet,**
**dass** sie an den Enden der zweiten Leitung vorgesehene und mit der ersten Leitung in thermischem Kontakt stehende Wärmetauscher (11, 18) zum Erwärmen und/oder Verdampfen des Wärmeüberträgermediums (24) beim Einleiten des kryogenen Mediums (10) in die erste Leitung und zum Abkühlen und/oder Kondensieren des Wärmeüberträgermediums (20) bei der Entnahme des kryogenen Mediums (19) aus der ersten Leitung umfasst.

2. Leitungskomponente nach Anspruch 1, **dadurch gekennzeichnet, dass** als erste und/oder zweite Wärmetauscher Mikrowärmetauscher vorgesehen sind.

3. Leitungskomponente nach.Anspruch 1, **dadurch gekennzeichnet, dass** der innere Durchmesser der ersten Leitung kleiner gleich 20 mm, vorzugsweise kleiner gleich 2,5 mm ist.

4. Leitungskomponente nach Anspruch 3, **dadurch gekennzeichnet, dass** der innere Durchmesser der zweiten Leitung kleiner gleich 20 mm, vorzugsweise kleiner gleich 2,5 mm ist.

5. Leitungskomponente nach Anspruch 1, **dadurch gekennzeichnet, dass** diese innerhalb einer schon bestehenden Versorgungsleitung verlegt ist.

6. Leitungskomponente nach Anspruch 1, **dadurch gekennzeichnet, dass** die erste Leitung mit mindestens einem Speicher für kryogenen Energieträger sowie mit mindestens einem Verbraucher für kryogenen Energieträger verbunden ist, wobei direkt vor den Verbraucher gegebenenfalls ein Speicherbehälter für kryogenen Energieträger geschaltet ist.

7. Leitungskomponente nach Anspruch 1, **dadurch gekennzeichnet, dass** die erste und zweite Leitung entlang ihrer gesamten Länge in einer thermisch isolierenden Umgebung verlaufen.

8. Leitungskomponente nach Anspruch 1, **dadurch gekennzeichnet, dass** an den Leitungsenden oder/und an . Knotenpunkten kryogene Pufferbehälter (13, 16, 21, 23) vorgesehen sind.

9. Leitungskomponente nach Anspruch 1, **dadurch gekennzeichnet, dass** das Material der ersten und zweiten Leitung Metall oder Kunststoff ist.

10. Leitungskomponente nach Anspruch 9, **dadurch gekennzeichnet, dass** erste und zweite Leitungen so ausgewählt werden, dass sie bei Raumtemperatur biegsam sind.

11. Leitungskomponente nach Anspruch 1, **dadurch gekennzeichnet, dass** diese eine parallel zur ersten und zweiten Leitung verlaufende dritte Leitung umfasst.

12. Leitungskomponente nach Anspruch 11, **dadurch gekennzeichnet, dass** die dritte Leitung zum Transport von verdampftem kryogenen Medium vorgesehen ist und mit der ersten Leitung in Verbindung steht.

13. Leitungskomponente nach Anspruch 1, **dadurch gekennzeichnet, dass** die erste und zweite Leitung von einem Mantel umgeben sind, in dem sich nach der Verlegung und durch die Abkühlung während der Inbetriebnahme ein Vakuum ausbildet, wobei der Mantel einen gasdichten Raum bildet, der vor der Ausbildung des Vakuums mit einem Gas gefüllt ist, dessen Dampfdruck sich bei der Abkühlung stark erniedrigt, vorzugsweise ein Gas, das bei der Abkühlung durch Kondensation vom gasförmigen direkt in den festen Aggregatzustand übergeführt wird.

14. Leitungskomponente nach Anspruch 1, **dadurch gekennzeichnet, dass** diese parallel zueinander verlaufende erste, zweite und gegebenenfalls dritte Leitungen (1, 2, 103) aufweist, wobei wenigstens die erste Leitung, vorzugsweise die erste und die zweite Leitung von mindestens zwei auf Abstand gehaltenen Isolationsfolien (3) umhüllt ist, die einen evakuierbaren Raum ausbilden, in dem sich ein bei tiefen Temperaturen durch Kondensation verfestigendes Material, vorzugsweise Kohlendioxid, und/oder ein durch Adsorption an ein Gettermaterial entfernbares Gas sowie ein Gettermaterial befindet, und wobei erste, zweite gegebenenfalls dritte Leitung und Isolationsfolien von einer thermisch isolierenden Hülle umgeben sind.

15. Leitungskomponente nach Anspruch 14, **dadurch gekennzeichnet, dass** mindestens eine der Isolationsfolien mit einer dünnen Metallschicht beschichtet ist.

16. Leitungskomponente nach Anspruch 14, **dadurch gekennzeichnet, dass** die erste, zweite und gegebenenfalls dritte Leitung zusätzlich noch mit einer Schicht aus thermisch isolierendem Material, vorzugsweise Schaumstoff umhüllt sind.

17. Leitungskomponente nach Anspruch 14, **dadurch gekennzeichnet, dass** der zwischen den Isolationsfolien ausgebildete evakuierbare Raum hebeln dem kondensierbaren Gas noch ein feinteiliges Isolationsmaterial, insbesondere Kieselsäurepulver, mineralische Fasern oder feinteilige Schaumstoffe enthält..

18. Leitungskomponente nach Anspruch 14, **dadurch gekennzeichnet, dass** erste und gegebenenfalls die zweite und/oder die dritte Leitung zusätzlich mit einer Schicht aus thermisch isolierendem Material, vorzugsweise Schaumstoff umhüllt sind.

19. Leitungskomponente nach Anspruch 1, **dadurch gekennzeichnet, dass** zwei oder mehrere Rohrleitungen aus erster und zweiter Leitung in einem Verbund vereinigt sind.

20. Leitungskomponente nach Anspruch 1, **dadurch gekennzeichnet, dass** eine Multifunktionsleitung vorgesehen ist, in der neben der ersten und zweiten Leitung (1, 2) weitere Leitungen (6, 8, 103) für Stoff-, Strom- und/oder Signaltransport vorgesehen sind.

21. Leitungskomponente nach Anspruch 19, **dadurch gekennzeichnet, dass** neben der ersten und zweiten Leitung eine dritte Leitung (103) für den Rücktransport des gasförmigen Wärmeüberträgermediums vom ersten Wärmetauscher zum zweiten Wärmetauscher vorgesehen ist, die von der ersten und zweiten Leitung thermisch isoliert ist.

22. Leitungskomponente nach Anspruch 19, **dadurch gekennzeichnet, dass** die erste und/oder zweite Leitung ein supraleitendes Material enthält und/oder dass eine weitere Leitung enthaltend supraleitendes Material vorgesehen, ist.

23. Leitungskomponente nach Anspruch 19, **dadurch gekennzeichnet, dass** die erste und/oder zweite Leitung als elektrisch leitende Einzelleitungen ausgeführt sind, die mit einer elektrischen Isolierung versehen sind und als elektrische Leiter für Strom- und/oder Signalübertragungen verwendet werden.

24. Leitungskomponente nach Anspruch 1, **dadurch gekennzeichnet, dass** die erste Leitung am Ort des zweiten Wärmetauschers und/oder an den Orten der Ableitung von Wasserstoff aus der ersten Leitung in die dritte Leitung mit einem Katalysator für die Umwandlung von para-Wasserstoff in ortho-Wasserstoff beschichtet ist.

25. Verfahren zum Leitungstransport von kryogenen Energieträgern in einer Leitungskomponente nach Anspruch 1 umfassend die Schritte:
i) Einspeisen eines gasförmigen und/oder flüssigen kryogenen Energieträgers (10) in eine erste Leitung,
ii) Abkühlung und gegebenenfalls Verflüssigung des flüssigen kryogenen Energieträgers am Ort der Einspeisung in die erste Leitung durch Übertragung von thermischer Energie von dem kryogenen Energieträger auf ein flüssiges Wärmeüberträgermedium in einer zweiten Leitung, die mit einem ersten Wärmetauscher (11) in Verbindung steht, wodurch das Wärmeüberträgermedium verdampft und aus der zweiten Leitung ausgeschleust wird (24),
iii) Transport des flüssigen kryogenen Energieträgers durch die erste Leitung,
iv) Transport des flüssigen Wärmeüberträgermediums durch die zweite Leitung im Gegenstrom zum kryogenen Energieträger,
v) Verdampfen des flüssigen kryogenen Energieträgers am Ort der Ausschleusung aus der ersten Leitung durch Übertragung von thermischer Energie von dem gasförmigen Wärmeüberträgermedium (20) auf den flüssigen kryogenen Energieträger in der ersten Leitung, die mit einem zweiten Wärmetauscher (18) in Verbindung steht, wodurch das Wärmeüberträgermedium verflüssigt und in die zweite Leitung eingeschleust wird, und
vi) Ausschleusen des gasförmigen kryogenen Energieträgers aus der ersten Leitung (19).

26. Verfahren nach Anspruch 25, **dadurch gekennzeichnet, dass** das gasförmige Wärmeüberträgermedium am Ort des zweiten Wärmetauschers aus der Umgebung in die zweite Leitung eingeführt und am Ort des ersten Wärmetauschers in die Umgebung ausgeschleust wird.

27. Verfahren nach Anspruch 25, **dadurch gekennzeichnet, dass** das gasförmige Wärmeüberträgermedium in einer dritten Leitung (103), die von der ersten und zweiten Leitung thermisch isoliert ist, vom ersten Wärmetauscher zum zweiten Wärmetauscher zurückgeführt und dort in verflüssigter Form in die zweite Leitung wieder eingespeist wird.

28. Verfahren nach Anspruch 25, **dadurch gekennzeichnet, dass** als kryogene Energieträger bei Raumtemperatur gasförmige Kohlenwasserstoffe und/oder Wasserstoff eingesetzt werden, insbesondere Methan; Ethan, Propan, Butan oder deren Gemische, vorzugsweise Erdgas und ganz besonders bevorzugt Wasserstoff.

29. Verfahren nach Anspruch 25, **dadurch gekennzeichnet, dass** als Wärmeüberträgermedium Stickstoff oder insbesondere Luft eingesetzt werden.

30. Verfahren nach Anspruch 25, **dadurch gekennzeichnet, dass** in einer parallel zur ersten und zweiten Leitung verlaufenden dritten Leitung (103) gasförmiger Energieträger transportiert wird, der durch Verdampfen von kryogenem Energieträger entstanden ist.

31. Verfahren nach Anspruch 30, **dadurch gekennzeichnet, dass** der in der dritten Leitung transportierte gasförmige Energieträger am Ort des Verbrauchers mit dem aus der ersten Leitung ausgeschleusten und verdampften Energieträger kombiniert wird.

32. Verfahren nach Anspruch 30, **dadurch gekennzeichnet, dass** der in der dritten Leitung transportierte gasförmige Energieträger am Ort des Einspeisens des kryogenen Engergieträgers in die erste Leitung verflüssigt wird und zusammen mit diesem in.die erste Leitung eingespeist wird.

33. Verwendung der Leitungskomponente nach Anspruch 1 zur Versorgung von gewerblichen oder privaten Verbrauchern, insbesondere von Tankstellen, Gewerbebetrieben, Häusern oder Wohnungen mit kryogenen Energieträgern, insbesondere mit Erdgas oder mit Wasserstoff.

34. Energienetz, umfassend mindestens eine Leitungskomponente nach Anspruch 1.

## Claims

1. Conduit component for a power supply network, comprising at least one first conduit for an at least partially liquid cryogenic energy carrier and at least one second conduit for a heat transfer medium liquid at the temperature of the liquid cryogenic energy carrier, said second conduit running parallel to the first conduit, **characterized in that** said conduit component comprises heat exchangers (11, 18), which are provided at the ends of the second conduit and are in thermal contact with the first conduit, for heating and/or evaporating the heat transfer medium (24) during introduction of the cryogenic medium (10) into the first conduit and for cooling and/or condensing the heat transfer medium (20) during the extraction of the cryogenic medium (19) from the first conduit.

2. Conduit component according to Claim 1, **characterized in that** microheat exchangers are provided as the first and/or second heat exchanger.

3. Conduit component according to Claim 1, **characterized in that** the inside diameter of the first conduit is smaller than or equal to 20 mm, preferably smaller than or equal to 2.5 mm.

4. Conduit component according to Claim 3, **characterized in that** the inside diameter of the second conduit is smaller than or equal to 20 mm, preferably smaller than or equal to 2.5 mm.

5. Conduit component according to Claim 1, **characterized in that** this is installed within an already existing supply conduit.

6. Conduit component according to Claim 1, **characterized in that** the first conduit is connected to at least one store for cryogenic energy carrier and to at least one consumer for cryogenic energy carrier, a storage vessel for cryogenic energy carrier being connected, if appropriate, directly upstream of the consumer.

7. Conduit component according to Claim 1, **characterized in that** the first and second conduit run, along their entire length, in a thermally insulating environment.

8. Conduit component according to Claim 1, **characterized in that** cryogenic buffer vessels (13, 16, 21, 23) are provided at the conduit ends and/or at nodal points.

9. Conduit component according to Claim 1, **characterized in that** the material of the first and second conduit is metal or plastic.

10. Conduit component according to Claim 9, **characterized in that** the first and second conduits are selected such that they are flexible at room temperature.

11. Conduit component according to Claim 1, **characterized in that** this comprises a third conduit running parallel to the first and second conduit.

12. Conduit component according to Claim 11, **characterized in that** the third conduit is provided for the transport of evaporated cryogenic medium and is connected to the first conduit.

13. Conduit component according to Claim 1, **characterized in that** the first and second conduit are surrounded by a casing in which a vacuum is formed after installation and due to the cooling during operation, the casing forming a gastight space which, before the vacuum is generated, is filled with a gas, the vapor pressure of which decreases sharply during cooling, preferably a gas which, during cooling, is transferred by condensation from the gaseous state directly into the solid state of aggregation.

14. Conduit component according to Claim 1, **characterized in that** this has a first, second and, if appropriate, third conduit (1, 2, 103) running parallel to one another, at least the first conduit, preferably the first and the second conduit, being sheathed by at least two spaced-apart insulation foils (3) which form an evacuatable space in which a material, preferably carbon dioxide, solidifying by condensation at low temperatures and/or a gas removable by adsorption onto a getter material and also a getter material are located, and the first, second and, if appropriate, third conduit and insulation foils being surrounded by a thermally insulating sheath.

15. Conduit component according to Claim 14, **characterized in that** at least one of the insulation foils is coated with a thin metal layer.

16. Conduit component according to Claim 14, **characterized in that** the first, second and, if appropriate, third conduits are additionally also sheathed with a layer of thermally insulating material, preferably foam material.

17. Conduit component according to Claim 14, **characterized in that** the evacuatable space formed between the insulation foils also contains, in addition to the condensable gas, a finely particulate insulation material, in particular powdered silicic acid, mineral fibers or finely particulate foam materials.

18. Conduit component according to Claim 14, **characterized in that** the first and, if appropriate, the second and/or the third conduit is/are additionally sheathed with a layer of thermally insulating material, preferably foam material.

19. Conduit component according to Claim 1, **characterized in that** two or more pipelines from the first and second conduit are combined in a composite structure.

20. Conduit component according to Claim 1, **characterized in that** a multifunction conduit is provided, in which, in addition to the first and second conduit (1, 2), further conduits (6, 8, 103) for material, current and/or signal transport are provided.

21. Conduit component according to Claim 19, **characterized in that**, in addition to the first and second conduit, a third conduit (103) for the return transport of the gaseous heat transfer medium from the first heat exchanger to the second heat exchanger is provided, which is thermally insulated from the first and second conduit.

22. Conduit component according to Claim 19, **characterized in that** the first and/or second conduit contains/contain a superconducting material, and/or **in that** a further conduit containing superconducting material is provided.

23. Conduit component according to Claim 19, **characterized in that** the first and/or second conduit is/are designed as electrically conducting individual conduits which are provided with an electric insulation and are used as electrical conductors for current and/or signal transmissions.

24. Conduit component according to Claim 1, **characterized in that** the first conduit is coated at the location of the second heat exchanger and/or at the locations of the discharge of hydrogen from the first conduit into the third conduit with a catalyst for the conversion of parahydrogen into orthohydrogen.

25. Method for the conduit transport of cryogenic energy carriers in a conduit component according to Claim 1, comprising the steps:
i) feed of a gaseous and/or liquid cryogenic energy carrier (10) into a first conduit,
ii) cooling and, if appropriate, condensation of the liquid cryogenic energy carrier at the location of the feed into the first conduit by transmission of thermal energy from the cryogenic energy carrier to a liquid heat transfer medium in a second conduit which is connected to a first heat exchanger (11), with the result that the heat transfer medium evaporates and is discharged (24) from the second conduit,
iii) transport of the liquid cryogenic energy carrier through the first conduit,
iv) transport of the liquid heat transfer medium through the second conduit in countercurrent to the cryogenic energy carrier,
v) evaporation of the liquid cryogenic energy carrier at the location of the discharge from the first conduit by transmission of thermal energy from the gaseous heat transfer medium (20) to the liquid cryogenic energy carrier in the first conduit which is connected to a second heat exchanger (18), with the result that the heat transfer medium condenses and is fed into the second conduit, and
vi) discharge of the gaseous cryogenic energy carrier from the first conduit (19).

26. Method according to Claim 25, **characterized in that** the gaseous heat transfer medium is introduced from the surroundings into the second conduit at the location of the second heat exchanger and is discharged into the surroundings at the location of the first heat exchanger.

27. Method according to Claim 25, **characterized in that** the gaseous heat transfer medium is recirculated, in a third conduit (103) which is thermally insulated from the first and second conduit, from the first heat exchanger to the second heat exchanger and is fed there in condensed form into the second conduit again.

28. Method according to Claim 25, **characterized in that** the cryogenic energy carriers used are hydrocarbons gaseous at room temperature and/or hydrogen, in particular methane, ethane, propane, butane or their mixtures, preferably natural gas and, most especially preferably, hydrogen.

29. Method according to Claim 25, **characterized in that** the heat transfer medium used is nitrogen or, in particular, air.

30. Method according to Claim 25, **characterized in that** gaseous energy carrier which has occurred due to the evaporation of cryogenic energy carrier is transported in a third conduit (103) running parallel to the first and second conduit.

31. Method according to Claim 30, **characterized in that** the gaseous energy carrier transported in the third conduit is combined at the location of the consumer with the evaporated energy carrier discharged from the first conduit.

32. Method according to Claim 30, **characterized in that** the gaseous energy carrier transported in the third conduit is condensed at the location of the feed of the cryogenic energy carrier into the first conduit and is fed, together with this, into the first conduit.

33. Use of the conduit component according to Claim 1, for supplying commercial or private consumers, in particular filling stations, industrial companies, houses or dwellings, with cryogenic energy carriers, in particular with natural gas or hydrogen.

34. Power supply network, comprising at least one conduit component according to Claim 1.

## Revendications

1. Elément de conduit pour un réseau d'énergie qui comprend au moins un premier conduit pour un vecteur énergétique cryogène au moins en partie liquide et au moins un deuxième conduit pour un fluide caloporteur liquide à la température du vecteur énergétique cryogène liquide et qui s'étend parallèlement au premier conduit,
**caractérisé en ce que**
il présente des échangeurs de chaleur (11, 18) prévus aux extrémités du deuxième conduit et en contact thermique avec le premier conduit, pour chauffer et/ou vaporiser le fluide caloporteur (24) lorsque le fluide cryogène (10) est introduit dans le premier conduit et pour refroidir et/ou condenser le fluide caloporteur (20) lorsque le fluide cryogénique (19) est prélevé dans le premier conduit.

2. Elément de conduit selon la revendication 1, **caractérisé en ce que** des micro-échangeurs de chaleur sont prévus comme premier et/ou deuxième échangeur de chaleur.

3. Elément de conduit selon la revendication 1, **caractérisé en ce que** le diamètre intérieur du premier conduit est inférieur ou égal à 20 mm et de préférence inférieur ou égal à 2,5 mm.

4. Elément de conduit selon la revendication 3, **caractérisé en ce que** le diamètre intérieur du deuxième conduit est inférieur ou égal à 20 mm et de préférence inférieur ou égal à 2,5 mm.

5. Elément de conduit selon la revendication 1, **caractérisé en ce qu'**il est placé à l'intérieur d'un conduit d'alimentation existant.

6. Elément de conduit selon la revendication 1, **caractérisé en ce que** le PC est relié à une réserve de vecteur énergétique cryogénique ainsi qu'à au moins un consommateur du vecteur énergétique cryogénique, un récipient de réserve de VEC étant éventuellement raccordé directement en amont du consommateur.

7. Elément de conduit selon la revendication 1, **caractérisé en ce que** le premier et le deuxième conduit s'étendent sur toute leur longueur dans un environnement thermiquement isolant.

8. Elément de conduit selon la revendication 1, **caractérisé en ce que** des réservoirs tampons cryogéniques (13, 16, 21, 23) sont prévus aux extrémités de conduit et/ou aux points de noeud.

9. Elément de conduit selon la revendication 1, **caractérisé en ce que** le matériau du premier et du deuxième conduit est un métal ou une matière synthétique.

10. Elément de conduit selon la revendication 9, **caractérisé en ce que** le premier et le deuxième conduit sélectionnés sont flexibles à température ambiante.

11. Elément de conduit selon la revendication 1, **caractérisé en ce qu'**il comporte un troisième conduit qui s'étend parallèlement au premier et au deuxième conduit.

12. Elément de conduit selon la revendication 11, **caractérisé en ce que** le troisième conduit est prévu pour transporter le fluide cryogénique vaporisé et communique avec le premier conduit.

13. Elément de conduit selon la revendication 1, **caractérisé en ce que** le premier et le deuxième conduit sont entourés par une enveloppe dans laquelle une dépression s'établit après pose et par le refroidissement lors de la mise en service, l'enveloppe formant un espace étanche au gaz qui, avant l'établissement de la dépression, est repli d'un gaz dont la tension de vapeur diminue fortement lors du refroidissement, de préférence un gaz qui est directement converti par condensation de l'état gazeux à l'état d'agrégat solide lors du refroidissement.

14. Elément de conduit selon la revendication 1, **caractérisé en ce qu'**il présente un premier, un deuxième et éventuellement un troisième conduit (1, 2, 103) qui s'étendent parallèlement les uns aux autres, au moins le premier conduit et de préférence le premier et le deuxième conduit étant entourés par au moins deux feuilles d'isolation (3) maintenues à distance et qui forment un espace apte à être placé sous vide dans lequel sont placés un matériau qui se solidifie par condensation à basse température, de préférence du dioxyde de carbone, et/ou un gaz qui peut être éliminé par adsorption sur un matériau adsorbant ainsi qu'un matériau adsorbant, le premier, le deuxième, l'éventuel troisième conduit et les feuilles d'isolation étant entourés par une enveloppe thermiquement isolante.

15. Elément de conduit selon la revendication 14, **caractérisé en ce qu'**au moins l'une des feuilles d'isolation est revêtue d'une mince couche métallique.

16. Elément de conduit selon la revendication 14, **caractérisé en ce que** le premier, le deuxième et l'éventuel troisième conduit sont encore entourés par une couche de matériau thermiquement isolant, de préférence une mousse.

17. Elément de conduit selon la revendication 14, **caractérisé en ce qu'**en plus d'un gaz condensable, l'espace apte à être mis en dépression et formé entre les feuilles d'isolation contient un matériau isolant en fines particules, en particulier de la poudre de silice, des fibres minérales ou de fines particules de mousse.

18. Elément de conduit selon la revendication 14, **caractérisé en ce que** le premier et éventuellement le deuxième et/ou le troisième conduit sont encore entourés d'une couche de matériau thermiquement isolant, de préférence une mousse.

19. Elément de conduit selon la revendication 1, **caractérisé en ce que** deux ou plusieurs conduits tubulaires formant le premier et le deuxième conduit sont rassemblés en un ensemble.

20. Elément de conduit selon la revendication 1, **caractérisé en ce qu'**il présente un conduit multifonctionnel dans lequel, en plus du premier et du deuxième conduit (1, 2), d'autres conduits (6, 8, 103) sont prévus pour le transport de matière, de courant et/ou de signaux.

21. Elément de conduit selon la revendication 19, **caractérisé en ce qu'**en plus du premier et du deuxième conduit, un troisième conduit (103) est prévu pour le renvoi du fluide caloporteur gazeux depuis le premier échangeur de chaleur jusqu'au deuxième échangeur de chaleur, le troisième conduit étant isolé thermiquement du premier et du deuxième conduit.

22. Elément de conduit selon la revendication 19, **caractérisé en ce que** le premier et/ou le deuxième conduit contiennent un matériau supraconducteur et/ou en ce qu'il présente un autre conduit qui contient un matériau supraconducteur.

23. Elément de conduit selon la revendication 19, **caractérisé en ce que** le premier et/ou le deuxième conduit sont configurés comme conduits distincts électriquement conducteurs dotés d'une isolation électrique et utilisés comme conducteurs électriques pour la transmission de courant et/ou de signaux.

24. Elément de conduit selon la revendication 1, **caractérisé en ce que** le premier conduit est revêtu d'un catalyseur de conversion de para-hydrogène en ortho-hydrogène sur le site du deuxième échangeur de chaleur et/ou sur les sites de l'extraction d'hydrogène du premier conduit vers le troisième conduit.

25. Procédé de transport par conduits de vecteurs énergétiques cryogéniques dans un élément de conduit selon la revendication 1, comportant les étapes qui consistent à :
i) injecter un vecteur énergétique cryogénique gazeux et/ou liquide (10) dans un premier conduit,
ii) refroidir et éventuellement liquéfier le vecteur énergétique cryogénique liquide sur le site de son injection dans le premier conduit en transférant de l'énergie thermique du vecteur énergétique cryogénique à un fluide caloporteur liquide présent dans un deuxième conduit qui communique avec un premier échangeur de chaleur (11), le fluide caloporteur étant vaporisé et extrait du deuxième conduit (24),
iii) transporter le vecteur énergétique cryogénique liquide dans le premier conduit,
iv) transporter le fluide caloporteur liquide par le deuxième conduit à contre-courant du vecteur énergétique cryogénique,
v) sur le site de l'extraction, vaporiser hors du premier conduit le vecteur énergétique cryogénique liquide en transférant de l'énergie thermique du fluide caloporteur gazeux (20) vers le vecteur énergétique cryogénique liquide présent dans le premier conduit qui communique avec un deuxième échangeur de chaleur (18), le fluide caloporteur se liquéfiant et étant injecté dans le deuxième conduit, et
vi) extraire le vecteur énergétique cryogénique gazeux hors du premier conduit (19).

26. Procédé selon la revendication 25, **caractérisé en ce que** le fluide caloporteur gazeux provenant de l'environnement est injecté dans le deuxième conduit sur le site du deuxième échangeur de chaleur et est extrait dans l'environnement sur le site du premier échangeur de chaleur.

27. Procédé selon la revendication 25, **caractérisé en ce que** le fluide caloporteur gazeux est renvoyé du premier échangeur de chaleur au deuxième échangeur de chaleur dans un troisième conduit (103) isolé thermiquement vis-à-vis du premier et du deuxième conduit et de là est réinjecté sous forme liquéfiée dans le deuxième conduit.

28. Procédé selon la revendication 25, **caractérisé en ce que** comme vecteur énergétique cryogénique à température ambiante, il utilise des hydrocarbures gazeux et/ou de l'hydrogène, en particulier du méthane, de l'éthane, du propane, du butane ou leurs mélanges, de préférence du gaz naturel et de façon tout particulièrement préférable de l'hydrogène.

29. Procédé selon la revendication 25, **caractérisé en ce que** comme fluide caloporteur, il utilise de l'azote et en particulier de l'air.

30. Procédé selon la revendication 25, **caractérisé en ce que** le vecteur énergétique gazeux dégagé par vaporisation du vecteur énergétique cryogénique est transporté dans un troisième conduit (103) qui s'étend parallèlement au premier et au deuxième conduit.

31. Procédé selon la revendication 30, **caractérisé en ce que** le vecteur énergétique gazeux transporté dans le troisième conduit est combiné sur le site du consommateur au vecteur énergétique vaporisé extrait du premier conduit.

32. Procédé selon la revendication 30, **caractérisé en ce que** le vecteur énergétique gazeux transporté dans le troisième conduit est liquéfié sur le site de l'injection du vecteur énergétique cryogénique dans le premier conduit et est injecté dans le premier conduit avec ce dernier.

33. Utilisation de l'élément de conduit selon la revendication 1 pour alimenter des consommateurs industriels ou privés, en particulier des stations de carburant, des entreprises industrielles, des maisons ou des habitations équipées de vecteurs énergétiques cryogéniques, en particulier de gaz naturel ou d'hydrogène.

34. Réseau d'énergie comprenant au moins un élément de conduit selon la revendication 1.
